# NEW EUROPEAN PATENT SPECIFICATION

(11) **EP 0 374 738 B2**
(45) Date of publication and mention of the opposition decision: **07.01.1998**
(45) Mention of the grant of the patent: 05.04.1995
(21) Application number: 89123160.7
(22) Date of filing: 14.12.1989
(51) Int. Cl.: H04N 1/29, H04N 1/32, G03G 15/20

(54) **Recording apparatus**
Aufzeichnungsgerät
Appareil d'enregistrement

(30) Priority: 15.12.1988 JP 317244/88; 21.12.1988 JP 324507/88
(43) Date of publication of application: 27.06.1990
(60) Divisional application: 94115127.6
(73) Proprietor: CANON KABUSHIKI KAISHA, Tokyo (JP)
(72) Inventor: Momose, Masanori, Yokohama-shi Kanagawa-ken (JP)
(74) Representative: Tiedtke, Harro, Dipl.-Ing.

(56) References cited:
- US-A- 4 566 779
- US-A- 4 589 764
- US-A- 4 618 245
- US-A- 4 638 368
- PATENT ABSTRACTS OF JAPAN vol. 10, no. 179 (E-414) 24 June 1986 ; & JP-A-61 029 261
- PATENT ABSTRACTS OF JAPAN vol. 12, no. 287 (E-643) 05 August 1988 ; & JP-A-63 063 276
- Review of the Electrical Communication Laboratories, vol. 19, nrs. 7 - 8, July - August 1971, pp. 852-864; K. Kobayashi et al.: "Facsimile Receiver with Electrostatic Recording".

## Description

### BACKGROUND OF THE INVENTION

### Field of the Invention

The present invention relates to a recording apparatus for forming a visible image on a recording material according to received signals and fixing said visible image by heat.

### Related Background Art

In conventional recording apparatus, such as facsimile apparatus, utilizing thermal image fixation, such as a laser beam printer utilizing plain paper for recording, the image fixing heater has to be always turned on because the temperature elevation thereof is slow. Thus the heater is so designed as to be continuously turned on to maintain a constant temperature regardless whether the facsimile apparatus is in the stand-by, receiving or transmitting state.

Such continuous energization of the fixing heater leads to following drawbacks:
(1) A high electric power consumption, giving rise to a high running cost;
(2) The operation becomes very uneconomical in the facsimile apparatus if the percentage of transmission is high, because the fixing heater is turned on during the stand-by state and transmission state, though the recording is required only in the reception and copying mode; and
(3) cooling for example with a fan is indispensable for avoiding temperature increase in the apparatus, and the dimension of the apparatus is inevitably increased for this reason.

Document JP-A-61 029 261 discloses a recording apparatus wherein the operation of a controller, which controls the automatical reading and storing of image data and sends out signals for starting and terminating the energization of a heater, depends on the reception of a call and the fixing means are activated directly after the receipt of a call.

Furthermore, from document JP-A-63 063 276 a recording apparatus is known wherein the driving of the fixing means is controlled in such a way that the power supply is stopped when the reception of image data is awaited, however, the activation of the fixing means depends on the reception of a call, that is the fixing means are activated directly after the receipt of a call.

Document US 4 589 764 discloses a laser beam printer operatively responsive to a printing signal fed from a host control unit. The printer includes a signal processing unit for receiving the printing signal from the host control unit. When the host control unit begins to supply a printing signal to the signal processing unit, the signal processing unit supplies a provisional start signal to a process control unit for controlling a printing unit. Upon reception of the provisional start signal, the process control unit controls the printing unit for executing a xerographic process, a laser beam scanning unit and a fusing unit to bring them into a ready state. Moreover, in case a printing start signal is not supplied within a preset time after the application of the provisional start signal or a next printing start signal is not supplied within another preset time after the printing termination, the laser beam scanning unit, the printing unit and the fusing unit are brought into a wait state.

Furthermore, from the Review of Electrical Communication Laboratories, Vol. 19, Numbers 7-8, July-August, 1971, pages 852-864, "Facsimile Receiver with Electrostatic Recording" a facsimile recording system is known, wherein recording styli contact scan on recording paper and wherein electrostatic recording is made. In the facsimile receiver developing and fixing start simultaneously when recording starts and they continue until treatment of the recorded part finishes. For fixing the recorded paper back side is closely contacted to the heated panel surface. In particular, in the receiver the recording paper travels from the recording section to the fixing section in about one minute, so that sufficient fixing treatment can be carried out if the heater power supply is connected or disconnected at the beginning of the recording or as the recording is finished.

Additionally, document US 4 566 779 discloses an electrophotographic copying machine having a removable process unit. This machine comprises a structural housing, means in the housing for supporting an original, a scanning device for optically scanning the original, a process unit including a photoconductive member, a toner supply means, a developing device, and a fixing device. The fixing device comprises three rollers. One roller occupying the intermediate position is a roller provided with a heat-resistant rubber or plastics coating arranged to impart a certain surface compliance to the roller itself. The other two rollers lying on opposite sides of the roller are interconnected by a heat-resistant plastics or metal belt of small thickness. The rollers circulate the belt such that sheets fed to the fixing device are drawn between the belt and the roller. A shoe of metal or other thermally conductive material is located within the belt and has a shape corresponding to the shape of the pass of the belt which presses the sheets against the roller. Further, the outer face of the belt is heated by resistive elements mounted on the shoe, whereas the low thermal inertia of the rollers and the shoe allows the heating elements associated therewith to be activated only when one of the sheets passes through the fixing device.

Finally, from document US 4 638 368 a reproduction apparatus for processing image information is known. The apparatus comprises a laser device for raster scanning a photoconductive toner uniformly dispersed on a copy sheet to provide character or picture patterns in response to video signals supplied externally and a pressure fixing device for fixing the toner remaining on the copy sheet by means of pressure. The reproduction apparatus is applied to the receiver of an information transmission apparatus. Image information transmitted through a telephone line is received by a receiver and temporarily stored in a memory apparatus, since the recording apparatus speed is higher than the information transmission speed. When a suitable amount of information is stored, the information is released therefrom to the laser device. During the transfer of operational instructions from a central processing unit to the various units of the apparatus image information is stored in the memory apparatus. The CPU monitors a call signal from the telephone line through a line switch and a line switch control and, upon reception of the call signal, releases an instruction for facsimile/telephone mode selection to the line switch control. Upon detection of a message end signal by a response signal detector the CPU returns a message confirmation signal. Subsequently, the CPU activates the recording apparatus to initiate the advancement of copy sheet, activates the laser device upon detection of arrival of the leading edge of copy sheet at the optical axis of the laser. When paper jamming occurs, the function of the recording apparatus is stopped. In case of entry of a copy command from the keyboard the CPU instructs the recording apparatus input/output control to activate a motor, a paper feed solenoid, a high-voltage transformer, a blower, etc..

### SUMMARY OF THE INVENTION

In consideration of the foregoing, an object of the present invention is to provide an improved recording apparatus.

Another object of the present invention is to provide a recording apparatus capable of reducing the electric power consumption.

Still another object of the present invention is to provide a recording apparatus capable of preventing temperature increase therein.

Still another object of the present invention is to provide a recording apparatus forming an image by an electrophotographic process, capable of energizing image fixing means in response to a received signal.

Still another object of the present invention is to provide a recording apparatus capable of energizing image fixing means at every predetermined communication unit.

Still another object of the present invention is to provide a recording apparatus capable of heating control for image fixing means according to the communication mode.

Still another object of the present invention is to provide a recording apparatus in which the power supply to image fixing means is turned off in the substituted reception mode.

According to the invention this object is accomplished by a recording apparatus comprising: communication means for receiving transmitted image data, recording means for forming a visible image on a recording material according to the image data received by said communication means, and fixing means for heat-fixing the visible image formed on said recording material by said recording means, said recording apparatus being characterized in that control means are provided which are adapted to start the heating of said fixing means after completion of communication of a procedure signal for determining a communication mode at the beginning of reception of said image data, wherein said fixing means comprises a heating member which can be heated to the fixing temperature within several seconds, a heat-resistant sheet and a back-up member opposed to and maintained in pressure contact with said heating member thereby maintaining said recording material in close contact with said heating member across said heat-resistant sheet, and said control means causes said recording means to start recording the image data after completion of reception of one page of the image data by said communication means.

The foregoing and still other objects of the present invention, and the advantages thereof, will become fully apparent from the following description to be taken in conjunction with the attached drawings.

### BRIEF DESCRIPTION OF THE DRAWINGS

Fig. 1 is a block diagram of a facsimile apparatus constituting an embodiment of the present invention;
Fig. 2 is a cross-sectional view of the facsimile apparatus;
Figs. 3A to 3C are timing charts showing the timing of heating of a heat generating member;
Fig. 4, consisting of Figs. 4A and 4B, is a flow chart of control sequence for the heat generating member;

### DETAILED DESCRIPTION OF THE PREFERRED EMBODIMENTS

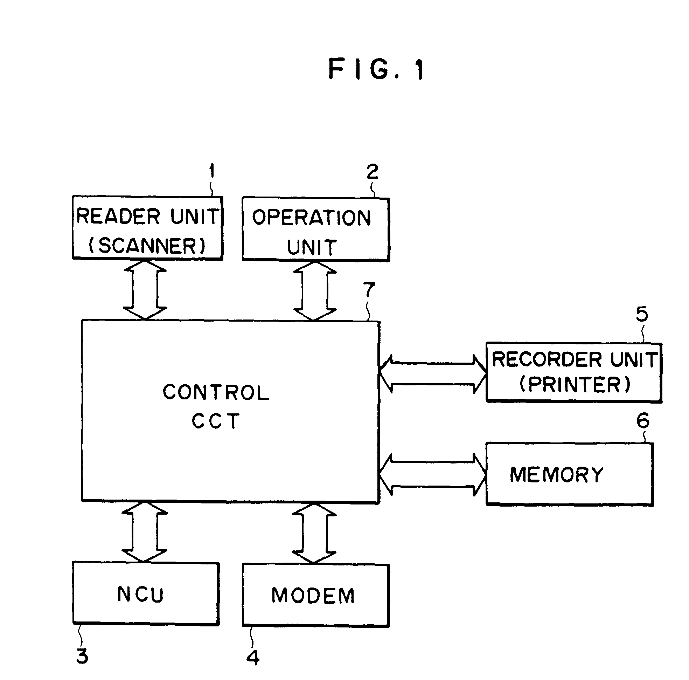

Fig. 1 is a schematic block diagram of a facsimile apparatus constituting an embodiment of the present invention, wherein provided are a reader unit 1 for reading an original document at the transmission; an operation unit 2 for setting the transmitting or receiving operation; a network control unit (NCU) 3 for effecting transmission to or reception from a communication channel; a modem 4 for demodulating analog signals from the NCU into digital signals or modulating digital signals into analog signals for transmission to the NCU; a memory 6 for storing data demodulated by the modem 4 and processed by a control circuit 7; and a recorder unit 5 for printing the data received from the memory 6 through the control circuit 7.

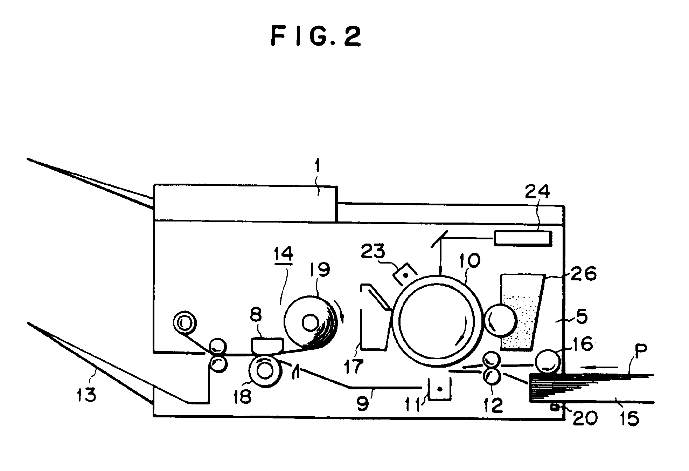

Fig. 2 is a schematic cross-sectional view of a facsimile apparatus embodying the present invention. A charger 23 uniformly charges a photosensitive drum 10 covered with a photosensitive layer composed for example of zinc oxide or an organic semiconductor. The photosensitive drum 10 uniformly charged with said charger 23 is imagewise exposed to a laser beam emitted from an optical system unit including a semiconductor laser, a polygon mirror etc. to form an electrostatic latent image, which is then rendered visible, in a developing unit 26, with toner particles composed for example of heat-fusible resin. On the other hand, a sheet P is advanced from a cassette 15, by a sheet feed roller 16, to the position of registration rollers 12. Then the sheet P is forwarded to an image transfer position by the registration rollers 12 positioned in mutual contact in vertical direction and driven in synchronization with the image formed on the photosensitive drum 10. Thus the toner image on the photosensitive drum 10 is transferred onto the sheet P by means of a transfer charger 11. Then the sheet P separated from the photosensitive drum 10 by already known separating means is transported along a transport guide 9 to a fixing unit 14, and is charged onto a tray 13 after image fixation by heating. After the transfer of the toner image, the toner remaining on the photosensitive drum 10 is removed by a cleaner 17. A sensor 20 is provided for detecting the presence of sheet in the cassette 15.

The fixing unit 14 indudes a heating member 8 generating heat by electric power supply, a pressure roller 18 and a heat resistant sheet (fixing film) 19. The heating member 8 is a linear member of a low heat capacity fixed to the apparatus, and is composed for example of an alumina substrate of 1.0 mm in thickness, 6 mm in width and 240 mm in length, coated with a resistance material of a width of 1.5 mm, which is given electric current supply from both ends. The electric power supply is conducted for example with pulses of DC 100 V with repeating cyde of 20 msec., and the pulse duration is varied in a range from 0.5 to 5 msec. according to the desired temperature and energy emission controlled by an unrepresented temperature detector.

The fixing film 19 is moved, in a direction indicated by an arrow, in contact with the heating member 8 controlled in temperature and energy emission as explained above. Said fixing film is for example composed of a heat resistant film, such as polyimide, polyetherimide, PES or PFA of a thickness of 20 µ, coated, at least on a face contacting the image, with a releasing layer of a thickness of 10 µ composed of a fluorinated resin such as PTFE or PAF and a conductive material. In general, the total thickness is less than 100 µ, preferably 40 µ. The pressure roller 18 provided with a releasing rubber layer, composed for example of silicone rubber, presses the heating member 8 across the fixing film with a total pressure of 4 - 7 kg. The sheet with unfixed toner image is guided along the guide 9 to the fixing unit, and the fixed image is obtained by the heating.

The fixing film explained above may also be formed as an endless film.

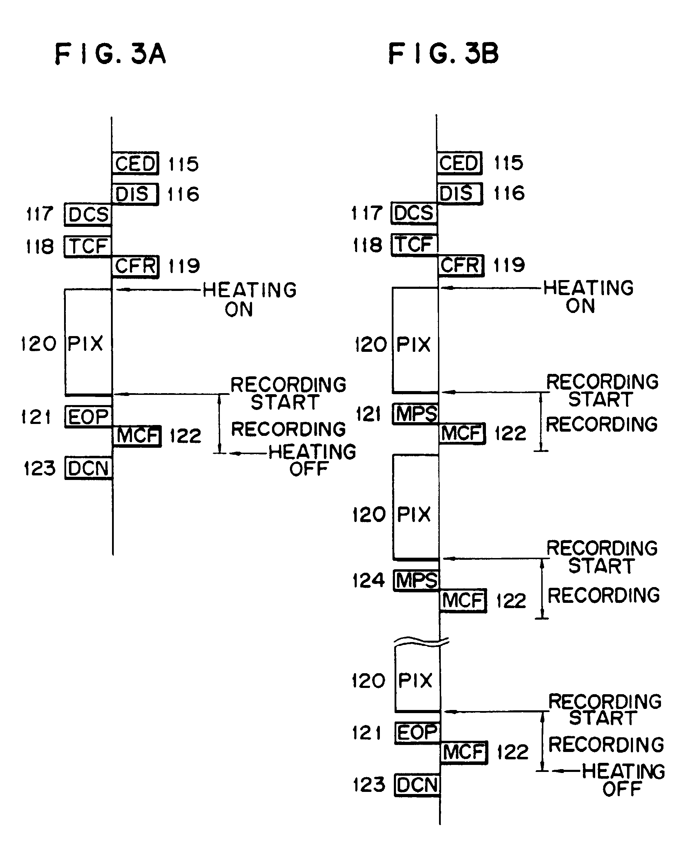

Figs. 3A to 3C are timing charts showing the function of the facsimile apparatus at the reception. The codes and functions of the signals are summarized in Tab. 1.

**Tab. 1**

| No. | Code | Function |
|---|---|---|
| 115 | CED | Caller identification, for auto facsimile reception; |
| 116 | DIS | Initial identification, for transmitting facsimile functions to the other station; |
| 117 | DCS | Reception command, for selecting reception mode according to the function of the other station; |
| 118 | TCF | Training check, for checking transmission error prior to image transmission; |
| 119 | CFR | Reception ready confirmation, for informing the read state for reception; |
| 120 | PIX | Image signal; |
| 121 | EOP | End of procedure, indicating end of transmission of a page without successing pages; |
| 122 | MCF | Message confirmation, indicating proper reception of image; |
| 123 | DCN | Disconnect, for disconnecting the channel; |
| 124 | MPS | Multi-page signal, indicating end of transmission of a page, with a succeeding page; |
| 125 | EOM | End of message, indicating end of transmission of a page with a succeeding page. |

Fig. 3A is a timing chart, indicating the timing of heating of the heating member 8 in case of single page reception. The heating operation of the heating member 8 is started at the start of reception of the PIX (image) signal 120 by the receiving unit, after the transmission of the CFR signal 119. Because of a small heat capacity, the heating member 8 can be heated to the fixing temperature within several seconds. This is sufficiently in time for the start of image recording after the reception, since the transmission of an image usually takes several ten seconds to several minutes. After the completion of recording, the heating is terminated in response to the EOP signal 121 indicating the reception of one page only.

Fig. 3B shows the timing of heating of the heating member 8 in case of multiple-page reception. The heating is started in the same manner as in the single page reception, but the heating operation of the heating member 8 is continued even after the recording of a page if the MPS (multi-page signal) 121 has been received. The same procedure is continued if the MPS signal 121 is received in succession. Finally the heating of the heating member 8 is turned off and the reception is terminated when the EOP 121 is received after the PIX signal 120.

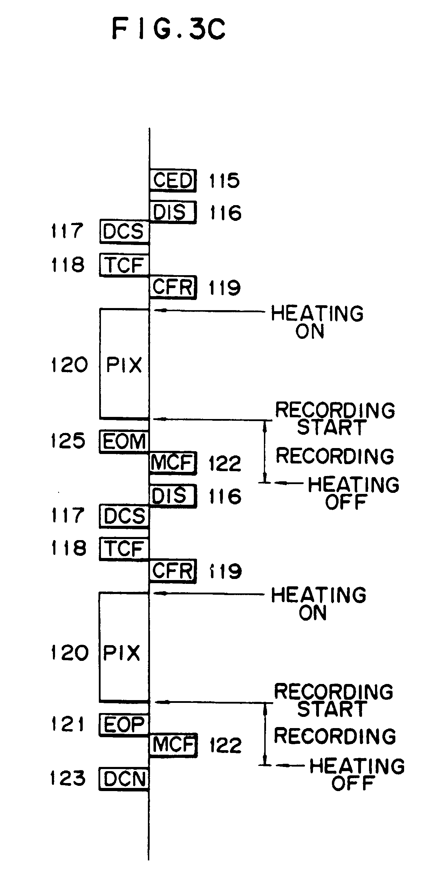

Fig. 3C shows the timing of heating in case of a mode change in the transmitted images in the multi-page reception. If the EOM signal 125 is received after the recording of a 1st page, the heating of the heating member 8 is turned off once, because the protocol signal for the next page takes time.

Subsequently the heating operation of the heating member 8 is started again at the start of reception of image signal of the next page, after the protocol (DIS, DCS - CFR). The procedure is same as explained above if the EOM signal 125 is received. Finally, in response to the EOP signal 121, the heating operation of the heating member 8 is turned off and the reception is terminated.

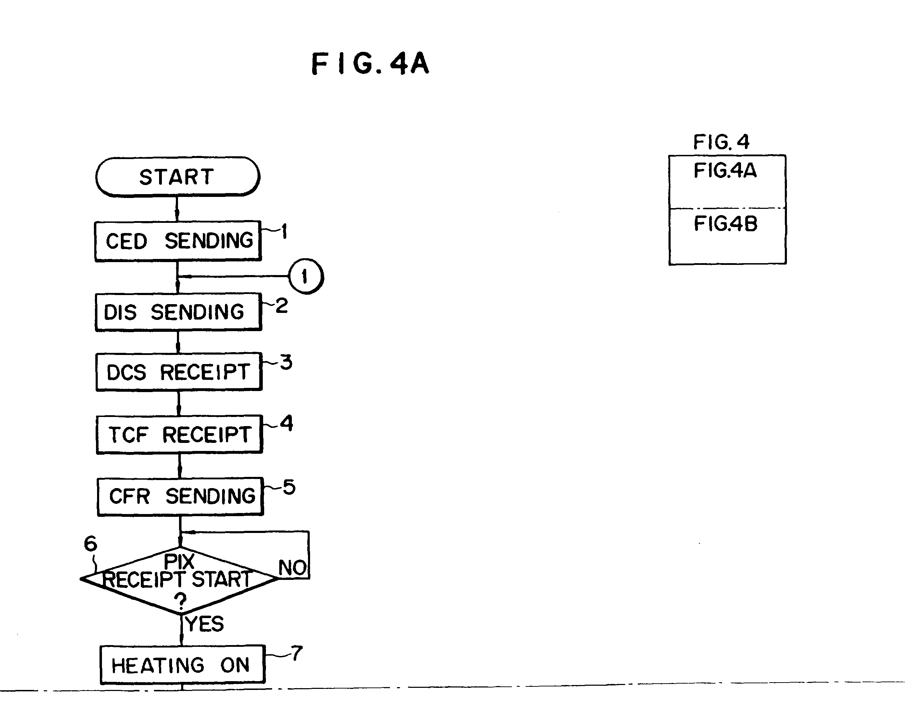

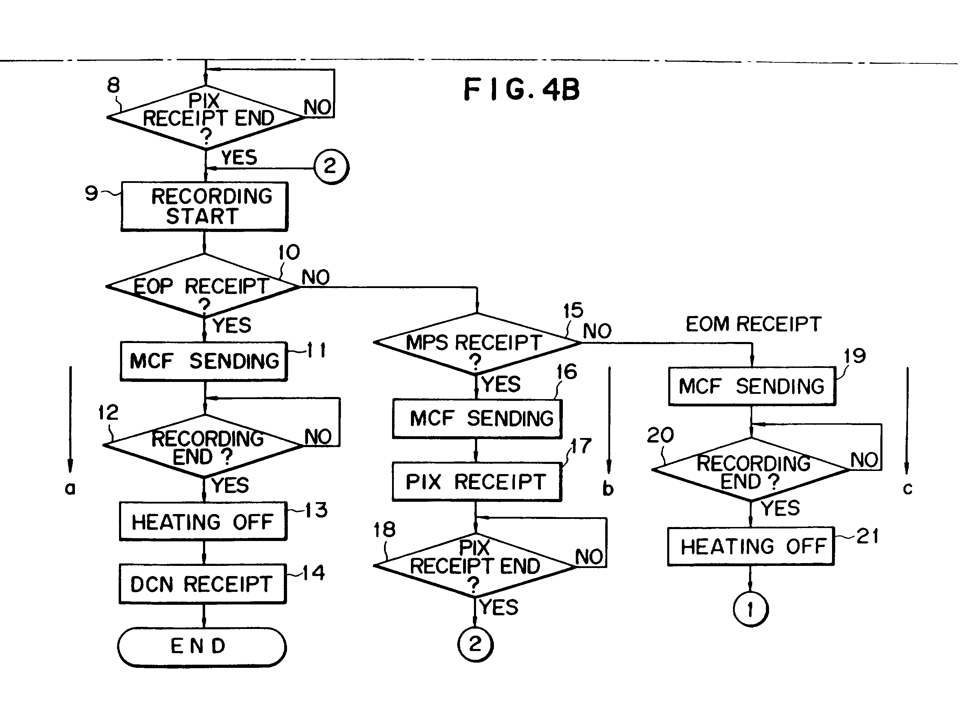

Fig. 4 is a flow chart for the above-explained control.

In response to a received call signal, the CED signal is transmitted (step 1), and then the DIS signal is transmitted to inform the facsimile function to the calling apparatus (step 2). Then the DCS signal for designating the reception mode is received from the calling apparatus (step 3), and the TCF signal for checking transmission error is received (step 4). If there is no transmission error, the CFR signal is transmitted to the calling apparatus to inform that the apparatus is ready for reception (step 5). Then the sequence waits until the start of reception of the image signal PIX (step 6). At the start of reception the image signal is stored in the memory 6, and the power supply to the heating member 8 is started (step 7). When the reception of the image signal PIX is completed (step 8), there is started the recording operation based on the received image signal (step 9). The image data are read from the memory 6 and are used for turning the laser beam on and off, thereby forming, on the photosenstive drum 10, an electrostatic latent image which is developed with toner in the developing unit 26. Also the sheet is fed from the cassette 15 to the position of the registration rollers, and is advanced to the image transfer position in synchronization with the image on the photosensitive drum 10. After the transfer of the toner image onto the sheet, it is transported to the fixing unit 14 for image fixation by heating. Then there is discriminated whether EOP signal, indicating the end of procedure, has been received (step 10), and, if received, the message confirmation signal MCF, indicating the proper reception of the image, is transmitted to the other apparatus (step 11). Then the sequence awaits the completion of the recording operation (step 12), and the power supply to the heating member 8 is turned off (step 13). Subsequently the procedure is terminated by receiving the DCN signal for disconnecting the channel.

If the EOP signal is not received in the step 10, there is discriminated whether the multi-page signal MPS, indicating the end of transmission of a page and the presence of a next page, has been received (step 15). If it is received, the message confirmation signal MCF is sent to the other apparatus (step 16). Then the image signal PIX of the next page is received and stored in the memory 6. After the completion of reception (steps 17, 18), and the sequence returns to the step 9.

On the other hand, if the multi-page signal MPS is not received in the step 15, the message confirmation signal MCF is sent to the other apparatus (step 19). Then, when the recording is completed (step 20), the power supply to the heating member 8 is turned off (step 21) and the sequence returns to the step 2.

In case of Fig. 3A, 3B or 3C, the sequence respectively proceeds to a flow a, b or c.

The heating member employed in the foregoing embodiment requires several seconds to reach the fixing temperature after the start of heating, but the heating member of improved performance requiring several ten to several milliseconds for heating allows control in the unit of each line, thereby further reducing the electric power consumption.

In such control for each line, it is possible to judge the content of image information and to dispense with the heating in case a line consists of all white pixels.

## Claims

1. A recording apparatus comprising:
communication means (3) for receiving transmitted image data, recording means (5) for forming a visible image on a recording material (P) according to the image data received by said communication means (3), and
fixing means (14) for heat-fixing the visible image formed on said recording material (P) by said recording means (5),
said recording apparatus being characterized in that control means (7) are provided which are adapted to start the heating of said fixing means (14) after completion of communication of a procedure signal for determining a communication mode at the beginning of reception of said image data, wherein said fixing means (14) comprises a heating member (8) which can be heated to the fixing temperature within several seconds, a heat-resistant sheet (19) and a back-up member opposed to and maintained in pressure contact with said heating member (8) thereby maintaining said recording material (P) in close contact with said heating member (8) across said heat-resistant sheet,
and said control means (7) causes said recording means to start recording the image data after completion of reception of one page of the image data by said communication means (3).

2. A recording apparatus according to claim 1, **characterized in that** said heating member (8) has a small heat capacity.

3. A recording apparatus according to daim 1, **characterized in that** said control means (7) is adapted to terminate the heating of said fixing means (14) in accordance with the completion of recording.

4. A recording apparatus according to daim 1, **characterized in that** said control means (7) controls the beginning and duration of heating of said fixing means (14) responsive to several different signals which correspond to a selected communication mode.

5. A recording apparatus according to daim 1, **characterized in that** said control means (7) terminates the heating of said fixing means (14) in accordance with the completion of recording of a page of image data in accordance with a signal (EOP) which indicates the end of transmission of a page without succeeding pages.

6. A recording apparatus according to claim 1, **characterized in that** said control means (7) terminates the heating of said fixing means (14) in accordance with the completion of recording a series of pages whereby a multipage signal (MPS) takes place between the transmission of succeeding pages and a signal (EOP) indicates end of transmission of a page without succeeding pages.

7. A recording apparatus according to any of the preceding daims 1 to 3, **characterized in that** said heating member (8) generates heat by electric power supply.

8. A recording apparatus according to claim 7, **characterized in that** said fixing means (14) requires several ten to several milliseconds for heating; and said control means (7) is adapted to turn on and off the power supply to said heating member (8) during the heat-fixing of each line of said visible image.

## Patentansprüche

1. Aufzeichnungsgerät mit
einer Übertragungseinrichtung (3) zum Empfang von übertragenen Bilddaten,
einer Aufzeichnungseinrichtung (5) zur Erzeugung eines sichtbaren Bildes auf einem Aufzeichnungsmaterial (P) gemäß den durch die Übertragungseinrichtung (3) empfangenen Bilddaten und
einer Fixiervorrichtung (14) zur Wärmefixierung des auf dem Aufzeichnungsmaterial (P) erzeugten sichtbaren Bildes durch die Aufzeichnungseinrichtung (5), **dadurch gekennzeichnet, daß** eine Steuereinrichtung (7) vorgesehen ist, die das Heizen der Fixiervorrichtung (14) nach Abschluß einer Übertragung eines Verfahrenssignals zur Bestimmung einer Übertragungs-Betriebsart bei dem Beginn des Empfangs der Bilddaten startet, wobei die Fixiervorrichtung (14) ein Heizteil (8), das innerhalb einiger Sekunden auf die Fixiertemperatur erwärmt werden kann, ein wärmebeständiges Blatt (19) und ein Ersatzteil aufweist, das dem Heizteil (8) gegenüberliegt und in Druckkontakt mit dem Heizteil (8) gehalten wird, wodurch das Aufzeichnungsmaterial (P) in engem Kontakt mit dem Heizteil durch das wärmebeständige Blatt hindurch gehalten wird, und die Steuereinrichtung (7) die Aufzeichnungseinrichtung veranlaßt, die Aufzeichnung der Bilddaten nach Abschluß des Empfangs einer Seite der Bilddaten durch die Übertragungseinrichtung (3) zu starten.

2. Aufzeichnungsgerät nach Anspruch 1, **dadurch gekennzeichnet, daß** das Heizteil (8) eine geringe Wärmekapazität hat.

3. Aufzeichnungsgerät nach Anspruch 1, **dadurch gekennzeichnet, daß**
die Steuereinrichtung (7) das Heizen der Fixiervorrichtung (14) entsprechend dem Abschluß der Aufzeichnung beendet.

4. Aufzeichnungsgerät nach Anspruch 1,
**dadurch gekennzeichnet, daß**
die Steuereinrichtung (7) den Beginn und die Dauer des Heizens der Fixiervorrichtung (14) im Ansprechen auf einige verschiedene Signale steuert, die einer ausgewählten Übertragungsart entsprechen.

5. Aufzeichnungsgerät nach Anspruch 1,
**dadurch gekennzeichnet, daß**
die Steuereinrichtung (7) das Heizen der Fixiervorrichtung (14) entsprechend dem Abschluß der Aufzeichnung einer Seite von Bilddaten entsprechend einem Signal (EOP) beendet, das das Ende des Sendens einer Seite ohne nachfolgende Seite anzeigt.

6. Aufzeichnungsgerät nach Anspruch 1,
**dadurch gekennzeichnet, daß**
die Steuereinrichtung (7) das Heizen der Fixiervorrichtung (14) entsprechend dem Abschluß der Aufzeichnung einer Reihe von Seiten beendet, wobei ein Mehrseitensignal (MPS, "multipage signal") zwischen dem Senden der nachfolgenden Seiten und einem Signal (EOP) auftritt, das das Ende des Sendens einer Seite ohne nachfolgende Seiten anzeigt.

7. Aufzeichnungsgerät nach einem der vorangehenden Ansprüche 1 bis 3,
**dadurch gekennzeichnet, daß**
das Heizteil (8) durch Zufuhr von elektrischer Energie Wärme erzeugt.

8. Aufzeichnungsgerät nach Anspruch 7,
**dadurch gekennzeichnet, daß**
die Fixiervorrichtung (14) einige zehn bis einige Millisekunden zum Heizen benötigt und
die Steuereinrichtung (7) die Stromzufuhr zu dem Heizteil (8) während der Wärmefixierung jeder Zeile des sichtbaren Bildes ein- und ausschaltet.

## Revendications

1. Appareil d'enregistrement comprenant :
des moyens de communication (3) pour recevoir des données d'image transmises,
des moyens d'enregistrement (5) pour former une image visible sur une matière d'enregistrement (P), conformément aux données d'image qui sont reçues par les moyens de communication (3), et
des moyens de fixage (14) pour fixer par la chaleur l'image visible qui est formée sur la matière d'enregistrement (P) par les moyens d'enregistrement (5),
cet appareil d'enregistrement étant caractérisé en ce que des moyens de commande (7) sont incorporés et sont conçus pour faire démarrer le chauffage des moyens de fixage (14) après l'achèvement de la transmission d'un signal de procédure pour déterminer un mode de communication, au début de la réception des données d'image, les moyens de fixage (14) comprenant un élément chauffant (8) qui peut être chauffé en quelques secondes jusqu'à la température de fixage, une feuille résistant à la chaleur (19) et un élément d'appui opposé à l'élément chauffant (8) et maintenu en contact avec pression contre celui-ci, pour maintenir ainsi la matière d'enregistrement (P) en contact serré avec l'élément chauffant (8), avec interposition de la feuille résistant à la chaleur,
et les moyens de commande (7) font en sorte que les moyens d'enregistrement commencent l'enregistrement des données d'image après l'achèvement d'une réception d'une page des données d'image par les moyens de communication (3).

2. Un appareil d'enregistrement selon la revendication 1, caractérisé en ce que l'élément chauffant (8) a une faible capacité calorifique.

3. Un appareil d'enregistrement selon la revendication 1, caractérisé en ce que les moyens de commande (7) sont conçus pour arrêter le chauffage des moyens de fixage (14) sous l'effet de l'achèvement de l'enregistrement.

4. Un appareil d'enregistrement selon la revendication 1, caractérisé en ce que les moyens de commande (7) commandent le début et la durée du chauffage des moyens de fixage (14) sous la dépendance de plusieurs signaux différents qui correspondent à un mode de communication sélectionné.

5. Un appareil d'enregistrement selon la revendication 1, caractérisé en ce que les moyens de commande (7) arrêtent le chauffage des moyens de fixage (14) sous l'effet de l'achèvement de l'enregistrement d'une page de données d'image, conformément à un signal (EOP) qui indique la fin de la transmission d'une page sans pages suivantes.

6. Un appareil d'enregistrement selon la revendication 1, caractérisé en ce que les moyens de commande (7) arrêtent le chauffage des moyens de fixage (14) sous l'effet de l'achèvement de l'enregistrement d'une série de pages dans des conditions dans lesquelles un signal de pages multiples (MPS) est intercalé entre la transmission de pages successives, et un signal (EOP) indique la fin de la transmission d'une page sans pages suivantes.

7. Un appareil d'enregistrement selon l'une quelconque des revendications 1 à 3 précédentes, caractérisé en ce que l'élément chauffant (8) produit de la chaleur en étant alimenté avec de l'énergie électrique.

8. Un appareil d'enregistrement selon la revendication 7, caractérisé en ce que
les moyens de fixage (14) nécessitent quelques millisecondes à quelques dizaines de millisecondes pour chauffer; et les moyens de commande (7) sont conçus pour établir et interrompre l'alimentation en énergie de l'élément chauffant (8) pendant le fixage par la chaleur de chaque ligne de l'image visible.
